Europäisches Patentamt

European Patent Office

Office européen des brevets

(11) Veröffentlichungsnummer: **0 388 946**
**A2**

## (12) EUROPÄISCHE PATENTANMELDUNG

(21) Anmeldenummer: **90105415.5**

(22) Anmeldetag: **22.03.90**

(51) Int. Cl.5: **B01D 19/00, G01N 35/08**

(30) Priorität: **22.03.89 DE 3909518**

(43) Veröffentlichungstag der Anmeldung:
**26.09.90 Patentblatt 90/39**

(84) Benannte Vertragsstaaten:
**BE CH DE DK FR GB IT LI NL SE**

(71) Anmelder: **Gesellschaft für
Biotechnologische Forschung mbH (GBF)
Mascheroder Weg 1
D-3300 Braunschweig-Stöckheim(DE)**

(72) Erfinder: **Schaffar, Bernhard, Dr.
Mascheroder Weg 1
D-3300 Braunschweig(DE)**
Erfinder: **Schillig, Henning
Mascheroder Weg 1
D-3300 Braunschweig(DE)**
Erfinder: **Dremel, Bernd
Mascheroder Weg 1
D-3300 Braunschweig(DE)**

(74) Vertreter: **Boeters, Hans Dietrich, Dr. et al
Boeters & Bauer Bereiteranger 15
D-8000 München 90(DE)**

(54) **Vorrichtung zum Entfernen von Gasblasen, insbesondere Luftblasen, aus einem Flüssigkeitsstrom.**

(57) Die Erfindung hat eine Vorrichtung zum Entfernen von Gasblasen, insbesondere Luftblasen, aus einem Flüssigkeitsstrom, insbesondere für die Fließ-Injektions- oder Fließ-Analyse, zum Gegenstand. Die Vorrichtung umfaßt eine Zuleitung und eine Ableitung für die Flüssigkeit. Zwischen der Zuleitung und der Ableitung ist ein Leitungsabschnitt angeordnet, der in einem Raum mündet, der auf der Oberseite offen ist und an der Unterseite von einem vorzugsweise kegelförmigen Körper begrenzt ist.

Fig. 1

EP 0 388 946 A2

Die Erfindung bezieht sich auf eine Vorrichtung zum Entfernen von Gasblasen, insbesondere Luftblasen, aus einem Flüssigkeitsstrom, insbesondere für die Fließ-Injektions- oder Fließ-Analyse.

Bei einer Anzahl chemischer Analyseverfahren werden herkömmliche Labortechniken, wie Pipettieren, Verdünnen, Mischen sowie chemische Reaktionen, Messungen mit Elektroden und Optroden durchgeführt. Beispielsweise bei der Fließ-Injektions-Analyse (FIA), einem naß-chemischen Analyseverfahren, das sich in den letzten Jahren zu einer wertvollen und häufig angewandten Methode entwickelt hat, werden herkömmliche analytische Labortechniken auf einen kontinuierlichen Fließprozeß übertragen derart, daß diese Labortechniken nun vollautomatisch durchgeführt werden können. Die zu analysierende Probe wird nach dem Mischen mit einem Reagenz in eine Strömung einer geeigneten Flüssigkeit (Trägerflüssigkeit) injiziert und zusammen mit dieser einem Detektionssystem zuge führt. Der Detektor zeigt den Probendurchgang an, und in einer nachgeschalteten Nachwerteeinrichtung wird der Analytgehalt der Probe quantitativ erfaßt. Aufgrund der hohen Wiederholrate der Einzelmessungen kann die Fließ-Injektions-Analyse als quasi kontinuierliches Verfahren angesehen werden.

Die Fließ-Injektions-Analyse basiert somit auf einer kontinuierlichen Strömung der Trägerflüssigkeit. In einem Gerät zur Fließ-Injektions-Analyse können aufgrund verschiedener Ursachen in der Trägerflüssigkeit Luft- bzw. Gasblasen vorhanden sein. Wenn im Gerätesystem ein niedrigerer Druck als der Außendruck herrscht, kann es aufgrund von Undichtigkeiten zu einem Eindringen von Luftblasen in die Trägerflüssigkeit kommen. Es können Unterdruckzonen vorhanden sein, in denen sich Luftblasen durch Gasausscheidung aus der gepumpten Flüssigkeit bilden. Bei Verwendung gaspermeabler Schläuche aus z.B. Teflon (Polytetrafluoräthylen) oder Silikon kann durch Gasdiffusion Luft in die Trägerflüssigkeit gelangen, so daß es häufig zu völlig falschen Analyseergebnissen kommt.

Die Fließanalyse unterscheidet sich von der Fließ-Injektions-Analyse lediglich dadurch, daß der Analyt kontinuierlich an einem Sensorelement vorbeigepumpt wird; vgl. beispielsweise Biosensors & Bioelectronics, 5 (1990) 137-148, 145.

Die durch Luft- oder Gasblasen in der Trägerflüssigkeit entstehenden Analysenfehler haben folgende Gründe. Durch die in der Trägerflüssigkeit vorhandenen Luftblasen ist das Volumen der Trägerflüssigkeit selbst geringer als das Gesamtvolumen, so daß der Probenanteil in der Flüssigkeitsströmung falsch bestimmt wird (Verdünnungsfehler).

Des weiteren kann eine Mischung oder Reaktion von zwei Komponenten durch Luftblasen verhindert werden, die die beiden Komponenten voneinander trennen. Bei Verwendung von Festkörperreaktoren bei einer heterogenen Katalyse kann die Katalyse stark beein trächtigt werden, wenn Luftblasen die katalytisch aktive Oberfläche belegen.

Es sind einige Versuche zur Entfernung von Luftblasen in Fließ-Injektions-Analyse-Geräten unternommen worden. Beispielsweise sind die verwendeten Flüssigkeiten entgast worden. Dieses Verfahren ist sehr zeit- und arbeitsaufwendig und zudem aufgrund der Anwendung eines Vakuums sehr gefährlich. Das Eindringen von Luftblasen in die Trägerflüssigkeit durch Undichtigkeiten kann im übrigen nicht verhindert werden. Dieser Luftanteil stört Analysen, bei denen ein bestimmter Partialdruck eines gelösten Gases in der Trägerflüssigkeit erforderlich ist, z.B. bei Sauerstoffoptroden/elektroden für Biosensoren.

Der Erfindung liegt die Aufgabe zugrunde, eine Vorrichtung zu schaffen, die eine einfache, wirksame und kostengünstige Entfernung von Gas- bzw. Luftblasen aus einem Flüssigkeitsstrom ermöglicht.

Diese Aufgabe ist bei einer Vorrichtung mit den Merkmalen des Anspruchs 1 gelöst. Vorteilhafte Weiterbildungen der Erfindung sind Gegenstand der Unteransprüche.

Eine erfindungsgemäße Vorrichtung zum Entfernen von Gasblasen, insbesondere Luftblasen aus einem Flüssigkeitsstrom, insbesondere für die Fließ-Injektions- oder Fließ-Analyse, umfaßt eine Zuleitung für die Flüssigkeit, eine Ableitung für die Flüssigkeit und einen dazwischen angeordneten Leitungsabschnitt, der auf der Oberseite eine Öffnung aufweist. In diesem Leitungsabschnitt ist ein sich nach oben verjüngender Fließwiderstand eingebaut, der Gasblasen an die Oberseite dieses Leitungsabschnittes lenkt.

Die erfindungsgemäße Vorrichtung bietet sowohl bei der Fließ-Injektions- als auch bei der Fließ-Analyse die Vorteile einer Miniaturisierung, eines kleinen Totvolumens und einer preiswerten, einfachen Herstellung.

Die Öffnung in dem zwischen der horizontalen Zuleitung und Ableitung befindlichen Leitungsabschnitt ermöglicht ein Austreten von Luftblasen aus der Flüssigkeit. Am Auslaß liegt zweckmäßig Unterdruck vor, so daß die Luftblasen aufgrund des Dichteunterschiedes leicht zum Auslaß angezogen werden und durch diesen durchtreten.

Die erfindungsgemäße Vorrichtung stellt somit eine Luftblasenfalle dar, die das Eindringen von Luftblasen etc. in empfindliche Teile des Systems verhindert, indem die Luftblasen aufgehalten und abtransporiert werden.

Eine besonders günstige Form des Fließwiderstands ist die Form eines Kegels. Die Wände des Kegels sind glatt und ohne Kanten oder Ecken, so daß sich keine Lufttaschen und dergleichen bilden können. Die Flüssigkeit passiert die Kegelbasis und tritt in die Ableitung ein, während die Luftblasen sich am Kegel abscheiden und nach oben wandern. Der Fließwiderstand zur Ableitung der Luftblasen nach oben kann auch eine andere Form haben. Jeder sich nach oben verjüngende geometrische Körper könnte eingesetzt werden (Pyramide, Halbkugel, Keil etc.). Der auf der Oberseite des Leitungsabschnitts befindliche Raum muß nicht unbedingt einen runden Querschnitt besitzen. Es könnte z.B. ein quadratischer Querschnitt mit einem keilförmigen Fließwiderstand verwendet werden.

Die Zu- und Ableitung muß nicht horizontal angebracht sein. Eine Zu- und Ableitung in einem bestimmten Winkel von unten könnte sogar vorteilhaft sein. Die Zu- und Ableitung muß jedoch so erfolgen, daß zumindest die Spitze des sich verjüngenden Fließwiderstandskörpers der höchste flüssigkeitsgefüllte Punkt im Modulgehäuse ist.

Die Bodenfläche des Raumes ist vorzugsweise größer als die Querschnittsfläche des Leitungsabschnittes. Hierdurch wird der Austritt von Luftblasen etc. in den Raum begünstigt.

Bei einem bevorzugten Ausführungsbeispiel der erfindungsgemäßen Vorrichtung hat der zwischen der Zuleitung und der Ableitung angeordnete Leitungsabschnitt einen kleineren Querschnitt als die Zuleitung. Dies ermöglicht eine Anordnung des darüber befindlichen Raumes mit geringem Platzbedarf.

Der Raum ist vorzugsweise in einem in der vertikalen Richtung langgestreckten Behälter angeordnet. Dies ermöglicht eine besonders einfache Ableitung der durch den Auslaß austretenden Luftblasen und eine einfache Erzeugung eines Unterdrucks am Auslaß.

Eine besonders einfache Ausgestaltung der Anschlüsse für die meist als Schlauchleitungen ausgeführten Flüssigkeitsleitungen ergibt sich, wenn die Zuleitung und/oder die Ableitung Anschlüsse für Verbindungen aufweisen, z.B. Gewinde. Selbstverständlich können auch andere Anschlüsse und andere Verbindungsleitungen als Schläuche verwendet werden. Auch der Behälter weist vorzugsweise einen Anschluß für eine Schlauchleitung auf. Die Schlauchleitung kann z.B. direkt durch Kleben befestigt sein.

Es ist vorzugsweise eine Pumpe an den Raum angeschlossen, um die aus der Flüssigkeit austretenden Gas- oder Luftblasen abzusaugen und somit das Austreten neuer Luftblasen zu erleichtern.

Die Gasabsaugrate beträgt vorzugsweise etwa 2 bis 10 µl/min bei einer Flüssigkeitsströmungsrate von etwa 0,1 bis 2 ml/min. Die Gasabsaugrate ist somit außerordentlich gering im Vergleich zur Flüssigkeitsströmungsrate. Die Pumpe muß die Gasblasen nicht unbedingt kontinuierlich absaugen, es sind auch Anwendungen denkbar, bei denen über die Pumpe schnell, für kurze Zeit, große Flüssigkeitsmengen (z.B. 10-100 ml/min) an Flüssigkeit abgesaugt werden und damit alle Luftblasen aus dem Fließsystem entfernt werden können.

Bei Verwendung der erfindungsgemäßen Vorrichtung in einem Gerät zur Fließ-Injektions- oder Fließ-Analyse ist die erfindungsgemäße Vorrichtung vorzugsweise direkt vor dem Detektionssystem angeordnet.

Die Erfindung wird im folgenden weiter anhand eines bevorzugten Ausführungsbeispiels und der Zeichnung beschrieben. In der Zeichnung zeigen:

Fig. 1 eine perspektivische schematische Ansicht der Vorrichtung,

Fig. 2a eine Draufsicht des Modulgehäuses von Fig. 1,

Fig. 2b einen Querschnitt des Modulgehäuses längs Linie A-B in Fig. 2a,

Fig. 2c einen Längsabschnitt des Modulgehäuses längs Linie C-D in Fig. 2a,

Fig. 3 eine perspektivische schematische Ansicht des Fließwiderstands,

Fig. 4 einen schematischen Längsschnitt des Modulgehäuses von Fig. 2 mit eingebautem Fließwiderstand (Fig. 3) und

Fig. 5 schematisch einen Teil eines Gerätes zur Fließ-Injektions-Analyse, in das die Vorrichtung von Fig. 1 eingebaut ist.

Bei dem veranschaulichten Ausführungsbeispiel der erfindungsgemäßen Vorrichtung ist diese in einer Grundeinheit bzw. einem Modulgehäuse 2 eingebaut. Das Modulgehäuse 2 ist langgestreckt mit etwa quadratischem Querschnitt und besitzt eine horizontale Zuleitung 4, die in eine erste (8) der quadratischen Grundflächen mündet und eine horizontale Ableitung 6, die in eine zweite (10) der quadratischen Grundflächen mündet. Die Zuleitung 4 und die Ableitung 6 erstrecken sich jeweils etwa ein Drittel in das Innere des Modulgehäuses 2 und sind durch einen dazwischen angeordneten Leitungsabschnitt 12 mit geringerem Querschnitt verbunden.

Etwa in der Mitte des Leitungsabschnittes 12 befindet sich ein diesen durchdringender Rohrstutzen 14, der sich bis zur Ober- und Unterseite des Modulgehäuses 2 erstreckt. Etwa im mittleren Abschnitt des Rohrstutzens 14 ist ein Kegelkörper 16 (Fließwiderstand) angeordnet. Der etwa zylinderförmige Unterteil des Kegelkörpers 16 ist im Bereich der Randflächen an der Wand des Stutzens 14 festgeklemmt bzw. verklebt oder geschweißt und mit seinem zylindrischen Unterteil mit der Wand des Stutzens 14 verklebt. Der Kegelkörper 16 ist so angebracht, daß die Kegelbasis an die Unterkante des Leitungsabschnitts 12 zu liegen kommt.

Der Kegelkörper 16 und das Modulgehäuse 2 sind beim veranschaulichten Ausführungsbeispiel aus Polymethylmethacrylat (PMMA, Plexiglas) gefertigt. Es können auch andere Kunststoffe z.B. Teflon, Polyethylen oder PVC verwendet werden, wobei nur auf Lösungsmittelbeständigkeit geachtet werden muß. Die Vorrichtung könnte auch aus Edelstahl gefertigt sein.

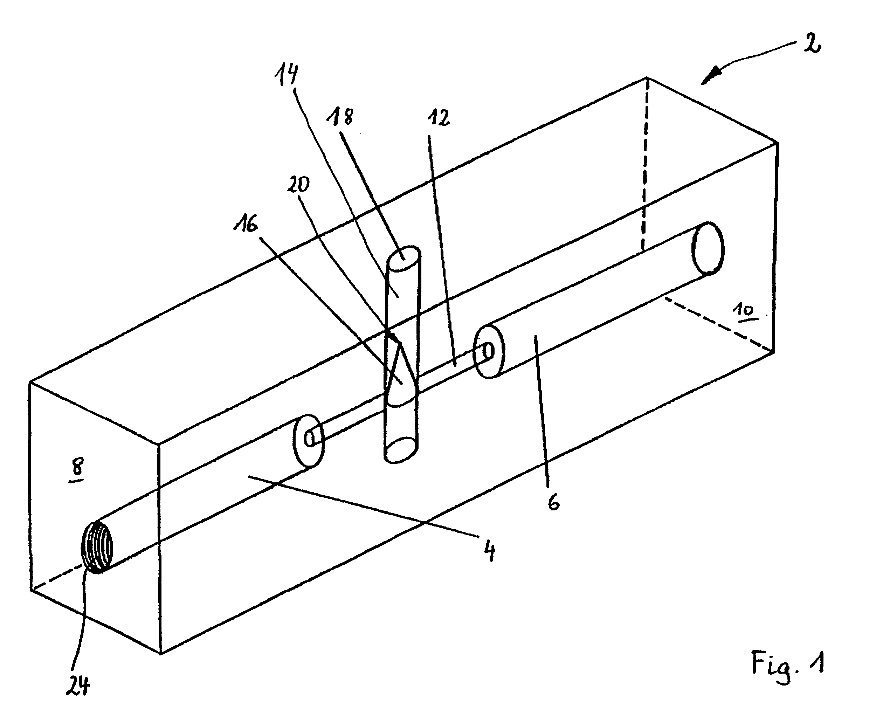

Oben am Stutzen 14 ist eine in Fig. 1 nicht dargestellte Pumpe 22 angeschlossen.

Für die Anschlüsse an weitere Geräteeinheiten weisen die Zuleitung 4 und die Ableitung 6 Gewinde 24 auf.

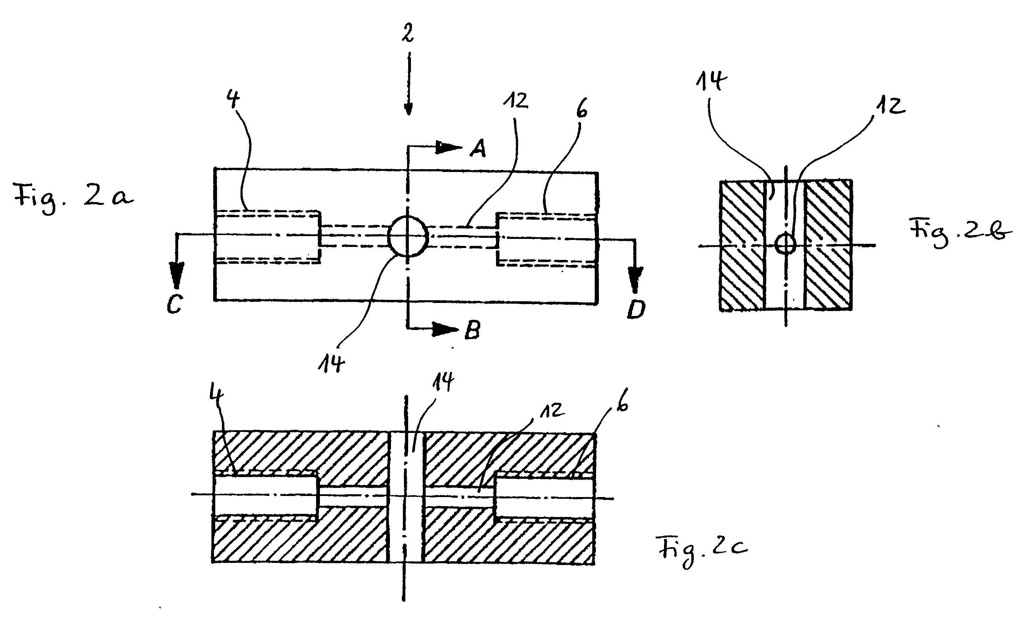

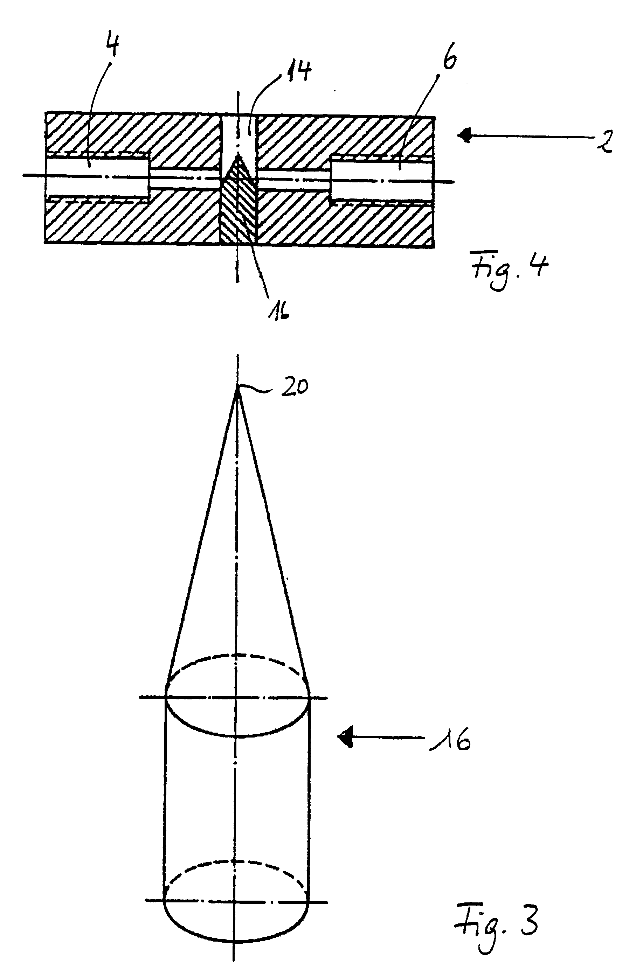

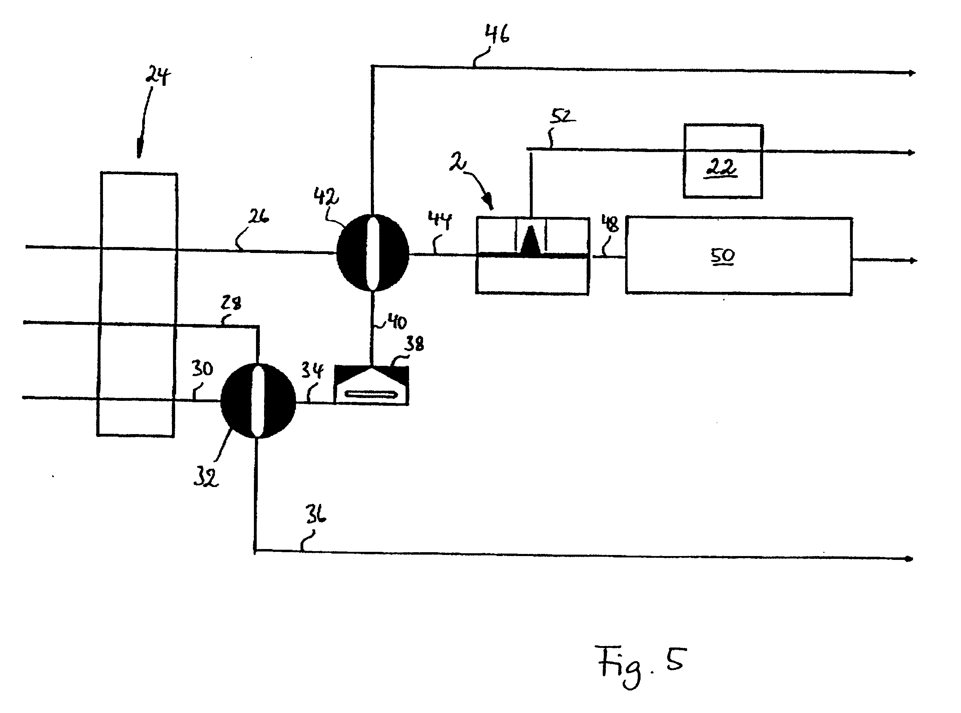

Die Funktion der in Fig.1 bis 4 dargestellten Vorrichtung ist folgende. Durch die Zuleitung 4 wird die Luftblasen etc. enthaltende Trägerflüssigkeit, die gegebenenfalls schon die Probenflüssigkeit enthalten kann, zugeführt. Die Flüssigkeit mit den Luftblasen wird dann in die durch den Leitungsabschnitt 12, den Kegelkörper 16 und den Stutzen 14 gebildete Luftblasenfalle geleitet. Die Flüssigkeit passiert die Kegelbasis und tritt durch die Ableitung 6 aus dem Modulgehäuse 2 wieder aus. Die Luftblasen aus der Flüssigkeit scheiden sich hingegen an der Wand des Kegelkörpers 16 ab und wandern aufgrund des Dichteunterschieds zur Kegelspitze 20, wodurch sie aus dem Leitungsabschnitt 12 in den Stutzen 14 gelangen. Durch den Auslaß 18 des Stutzens 14 werden die Luftblasen mittels der Pumpe 22 abgesaugt. Beim dargestellten Ausführungsbeispiel wird die Flüssigkeit mit etwa einem Durchfluß von 1 ml/min umgepumpt. Die Gasabsaugrate beträgt etwa 2 bis 10 $\mu$l/min.

In Fig. 5 ist die Integration der Luftblasenfalle, d.h. der in Fig. 1 dargestellten Vorrichtung, in ein Gerät zur Fließ-Injektions-Analyse veranschaulicht. Eine Pumpenanordnung 24 ist zum Fördern der Trägerflüssigkeit über eine Leitung 26 sowie zum Fördern weiterer Flüssigkeiten wie der Proben- und einer Reagenzflüssigkeit über Leitungen 28, 30 vorgesehen. Die Leitungen 28, 30 münden beide in ein Ventil 32 mit zwei Ableitungen 34, 36, von denen letztere zu einem Auslaß führt. Die Ableitung 34 mündet in eine Mischkammer 38. Die Mischkammer 38 ist über eine Leitung 40 mit einem weiteren Ventil 42 verbunden, in das ebenfalls die Leitung 26 mündet. Vom Ventil 42 führen eine Leitung 44 und eine Leitung 46 fort. Die Leitung 46 ist mit einem nicht weiter dargestellten Auslaß verbunden. Die Leitung 44 mündet in das Modulgehäuse 2 mit der Luftblasenfalle. Aus dem Modulgehäuse 2 führt eine Leitung 48 zu einem Detektionssystem 50 sowie eine Leitung 52 zur bereits erwähnten Pumpe 22.

Das Gerät zur Fließ-Injektions-Analyse arbeitet grundsätzlich wie ein herkömmliches Gerät, so daß seine Funktion nicht weiter erläutert wird. Lediglich durch den zusätzlichen Einbau des Modulgehäuses 2 mit der Luftblasenfalle ist die in das Detektionssystem 50 eintretende Flüssigkeit weitaus ärmer an Luftblasen etc. als bei herkömmlichen Geräten.

**Ansprüche**

1. Vorrichtung zum Entfernen von Gasblasen, insbesondere Luftblasen, aus einem Flüssigkeitsstrom, insbesondere für die Fließ-Injektions- oder Fließ-Analyse,
**gekennzeichnet** durch
- eine Zuleitung (4) für die Flüssigkeit,
- eine Ableitung (6) für die Flüssigkeit und
- einen dazwischen angeordneten Leitungsabschnitt (12), der auf der Oberseite eine Öffnung (14) aufweist und auf der Unterseite durch einen sich nach oben verjüngenden Fließwiderstand (Kegelkörper 16) begrenzt ist.

2. Vorrichtung nach Anspruch 1, dadurch **gekennzeichnet,** daß am Auslaß (18) Unterdruck vorliegt.

3. Vorrichtung nach Anspruch 1, dadurch **gekennzeichnet,** daß der Fließwiderstand (16) sich nach oben verjüngt (Kegel, Pyramide, Keil, Halbkugel etc.).

4. Vorrichtung nach einem der Ansprüche 1 bis 3, dadurch **gekennzeichnet,** daß die Bodenfläche des Fließwiderstands (18) größer als die Querschnittsfläche des Leitungsabschnittes (12) ist.

5. Vorrichtung nach Anspruch 4, dadurch **gekennzeichnet,** daß der Leitungsabschnitt (12) in den unteren Bereich des Raums (14) mündet und aus diesem fortführt.

6. Vorrichtung nach einem der Ansprüche 1 bis 5, dadurch **gekennzeichnet,** daß der Raum in einem in der vertikalen Richtung langgestreckten Behälter (14) angeordnet ist.

7. Vorrichtung nach einem der Ansprüche 1 bis 6, dadurch **gekennzeichnet,** daß die Zuleitung (4) und/oder die Ableitung (6) Anschlüsse für Schlauchverbindungen aufweisen.

8. Vorrichtung nach Anspruch 6, dadurch **gekennzeichnet,** daß der Raum (14) einen Anschluß für eine Schlauchleitung (52) aufweist.

9. Vorrichtung nach einem der Ansprüche 1 bis 8, dadurch **gekennzeichnet,** daß an den Raum (14) eine Pumpe (22) angeschlossen ist.

10. Vorrichtung nach Anspruch 8 oder 8 und 9, dadurch **gekennzeichnet,** daß die Gasabsaugrate etwa 2 bis 10 $\mu$l/min bei einer Flüssigkeitsströmungsrate von etwa 1 ml/min beträgt.

11. Vorrichtung zum Entfernen von Gasblasen, insbesondere Luftblasen, aus einem Flüssigkeitsstrom in einem Gerät zur Fließ-Injektions- oder Fließ-Analyse, dadurch **gekennzeichnet,** daß vor dem Detektionssystem (50) eine Vorrichtung nach einem der Ansprüche 1 bis 10 angeordnet ist.

Fig. 1

EP 0 388 946 A2

Fig. 2a

2

4    12    6

A

C    14    D

B

14

Fig. 2b

14    12

Fig. 2c

4    14    12    6

EP 0 388 946 A2

*Fig. 4*

*Fig. 3*

Fig. 5

EP 0 388 946 A2